Europäisches Patentamt

European Patent Office

Office européen des brevets

(19)

(11) Publication number: **0 117 668**
**B1**

(12) **EUROPEAN PATENT SPECIFICATION**

(45) Date of publication of patent specification: **29.04.87**

(51) Int. Cl.⁴: **H 02 M 1/08,** H 02 M 7/757

(21) Application number: **84300791.5**

(22) Date of filing: **08.02.84**

(54) Firing-angle control in inverters.

(30) Priority: **14.02.83 GB 8304016**

(43) Date of publication of application:
**05.09.84 Bulletin 84/36**

(45) Publication of the grant of the patent:
**29.04.87 Bulletin 87/18**

(84) Designated Contracting States:
**DE FR SE**

(56) References cited:
**US-A-3 474 321**
**US-A-3 891 912**

**IEEE TRANSACTIONS ON POWER
APPARATUS AND SYSTEMS, vol. PAS-89, no.
8, November/December 1970, pages 2056-
2064, New York, USA. J. ARRILLAGA et al.:
"Direct digital control of HVDC converters"**

(73) Proprietor: **ASSOCIATED ELECTRICAL
INDUSTRIES LIMITED
1 Stanhope Gate
London W1A 1EH (GB)**

(72) Inventor: **Ainsworth, John Desmond
The Hollies
Croxton Stafford (GB)**

(74) Representative: **Keppler, William Patrick
Central Patent Department Wembley Office The
General Electric Company, p.l.c. ·
Hirst Research Centre East Lane
Wembley Middlesex HA9 7PP (GB) ·**

# Description

The present invention relates to the control of multi-phase inverter arrangements of the type comprising a bridge array of gate-controlled unidirectional switching devices (typically thyristors) adapted to be fired sequentially so as to power an A.C. load from a D.C. supply.

It is desirable in principle to fire each switching device immediately before the zero-crossing point of its anode-cathode voltage but in practice this is not possible. This is because the conductivity of any practical switching device takes a finite time (in terms of electrical degrees, the "overlap angle" u) to increase to its maximum value after it is fired and conversely, to fall to zero after its anode-cathode current falls to zero. In order to prevent commutation failure, each switching device in an inverter must be fired sufficiently early for the conduction of the preceding thyristor to fall to zero before its anode/cathode voltage again goes positive and the same thyristor re-fires. This period is determined by the reactive behaviour of the load. The period in electrical degrees between the point at which the forward conduction falls to zero (at which point the anode-cathode voltage jumps to a negative value) and the positive-going zero-crossing point represents a margin of safety and is defined as the margin or extinction angle $\gamma$. The period in electrical degrees between the firing of the controlled switching device and said zero crossing point defines the firing angle $\beta$. Hence $\beta = \gamma + u$. One of the methods disclosed in patent No. 1,171,953 (which is incorporated herein by reference) provides for controlling $\beta$ in an inverter such that the mean of the instantaneous $\gamma$'s of the thyristor switching devices may be stabilised at a pre-set "demand" value. However in practice, imbalance in the phases of the A.C. load circuit may affect the voltage zero crossing points of the thyristors and thereby cause inequality in the associated $\gamma$'s. Hence known invertor control systems have until now used the alternative method disclosed in U.K. Patent No. 1,171,953 whereby a conservative demand value of mean $\gamma$ is chosen so that no individual $\gamma$ falls below a critical value in the presence of phase imbalance. Such control systems have the disadvantage that under conditions of imbalance of A.C. system voltages, although the smallest will be at the correct value, the average $\gamma$ will be larger, resulting in low D.C. voltage and inefficient plant utilisation.

Another multi-phase inverter arrangement is known from the article by J. Arrilaga et al: "Direct digital control of HVDC converters" in IEEE Transactions on Power Apparatus and Systems, Vol. PAS-89, No. 8, November/December 1970, Pages 2056—2064, New York, U.S.A. This article describes a multi-phase inverter comprising a bridge array of phase-controlled unidirectional switching devices, a controllable source of firing pulses for said switching devices and a phase control system comprising means for measuring the extinction angle of each switching device and for comparing actual extinction angle values with desired extinction angle values in order to equalise the extinction angles. This arrangement is virtually a digital version of that described in the above UK Patent No. 1171953 and provides control of extinction angle by comparison with a mean value. It does not provide selective control of individual extinction angles.

An object of the present invention is to provide an inverter in which the values of $\gamma$ for the switching devices are more closely controlled so that the efficiency of the inverter may be optimised.

According to the present invention, in such a multi-phase inverter the phase control system comprises means for comparing the values of selected extinction angles and deriving at least one net difference signal, means for deriving from the or each said net difference signal a control signal which is added to any other such control signal and applied to said source of firing pulses, each said control signal being of such form in magnitude, polarity and phase as to adjust the firing instants of the firing pulses of those switching devices which determine said selected extinction angles in a sense such as to tend to equalise said selected extinction angles.

Preferably said means for comparing the values of selected extinction angles compares sums each of two or more of said selected extinction angles of respective phase-controlled unidirectional switching devices.

Preferably the means for deriving a control signal comprises a multiplier which multiplies the net difference signal by a modulating signal, the modulating signal having a fundamental frequency which is equal to or a harmonic of the A.C. output frequency of the inverter and being phased so as to cause the phase control system to have maximum effect on those firing instants which determine the selected extinction angles ($\gamma$).

The modulating signal should be so phased that the phase control system advances the firing point of a switching device (i.e. increases $\beta$ for the switching device) whenever the extinction angle $\gamma$ determined by that $\beta$ (according to $\beta = u + \gamma$) is too small, and vice versa. It should be noted that the value of $\gamma$ measured across any given switching device is determined by the firing instant of the preceding switching device in the firing sequence.

Although the precise waveform of such a modulating signal is not critical, its fundamental frequency and waveform should be chosen so as to have as little effect as possible on the unselected extinction angles.

Furthermore the difference signal should preferably by time-averaged over at least one cycle of the A.C. output so that it is treated in effect as a virtually constant multiplier of the modulating signal. The speed of response of the control system will depend on the degree of smoothing of the difference signal.

Preferably an inverter in accordance with the present invention additionally incorporates feedback means for controlling the mean value $\gamma$ of all the switching devices, for example of the type disclosed in U.K. Patent No. 1,171,953. Such an inverter may then incorporate a plurality of phase-control systems in accordance with the invention, each control system balancing a different set of $\gamma$ values. The number of control systems and the particular sets of $\gamma$ values which are balanced may then be chosen so as to control any or all the degrees of freedom (equal to the number of switching devices employed) of the inverter, so that each switching device may be controlled individually if necessary.

The invention may be further understood by reference to Figures 1 to 7 of the accompanying drawings, of which:

Figure 1 is a circuit diagram of a known basic twelve pulse thyristor-controlled inverter;

Figure 2 shows schematically a typical sequence of firing pulses and waveforms in the thyristors of such an inverter;

Figure 3 shows schematically one arrangement for measuring $\gamma$;

Figure 4 shows a known form of feedback circuit for controlling the mean $\gamma$ in a thyristor controlled inverter;

Figure 5 shows schematically, by way of example, one particular control circuit for an inverter in accordance with the invention;

Figure 6 shows the waveform of one modulating signal for the inverter;

Figure 7 shows the waveform of another modulating signal for the inverter of Figure 5, and

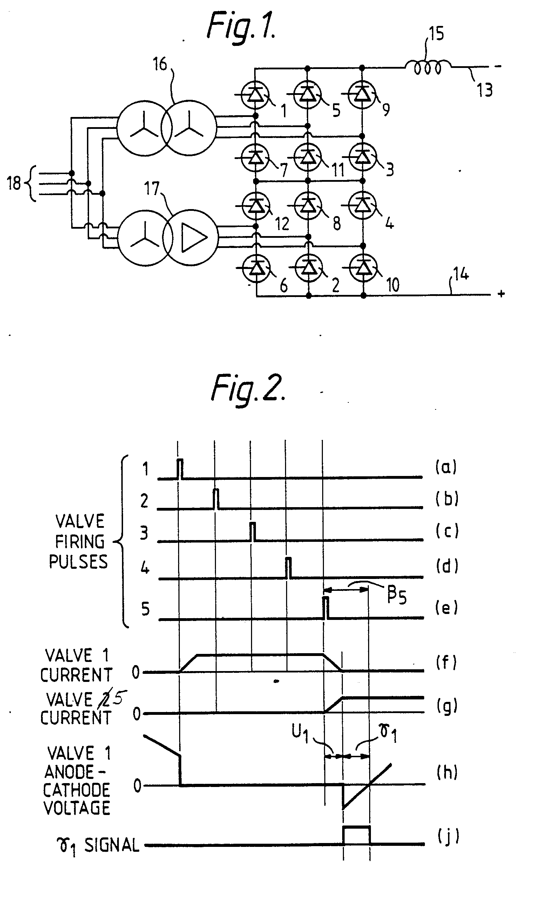

The inverter shown in Figure 1 is arranged to be connected between D.C. supply lines 13 and 14 and a three-phase transmission line 18. Thyristors 1 to 12 (numbered in order of firing sequence) are connected to form two bridges connected in series with respect to the D.C. side of the inverter and in parallel with respect to the A.C. side of the inverter. The outputs from the bridges are shifted by 30° by employing a star-star connected transformer 16 and a star-delta connected transformer 17 respectively to connect the bridges to the A.C. transmission line.

Such an inverter requires a set of 12 firing pulse sources (not shown) to fire the 12 valves; in steady state balanced operation the firing pulses are at equal relative spacings of 30°. Figure 2 shows some selected waveforms for the valves. Figures 2(a)—2(e) show firing pulses to valves 1 to 5, numbered in the normal firing sequence. Figure 2(f) shows current in valve 1; this is initiated by its own firing pulse, and is terminated by the firing of valve 5. However, the current in valve 1 requires a finite commutation overlap time $u_1$ electrical degrees to commutate to zero, while current in valve 5, Figure 2(g), simultaneously rises to the D.C. line current value.

Figure 2(h) shows the anode-cathode voltage of valve 1. This anode-cathode voltage is substantially zero during conduction, but jumps to a negative value at the moment its current reaches zero; it then rises until it crosses zero and becomes positive. The time (in electrical degrees) during which this voltage is negative is known as the extinction angle, gamma ($\gamma$); it is necessary for this angle to be above a certain value (say 6°) for each valve in normal operation to ensure full recovery of the thyristors, otherwise a thyristor may re-conduct prematurely as its voltage rises past zero, causing commutation failure and collapse of normal operation.

The time at which valve 1 voltage rises past zero corresponds to an A.C. voltage zero crossing, and it is convenient to define the firing angle of valve 5 as the time of its firing in electrical degrees ($\beta_5$) before this time instant. Thus from Figure 2 it will be seen that $\gamma_1 = \beta_1 - u_1$ so that $\gamma_1$ is determined by $\beta_5$ in the sense defined hereinabove.

In ideal balanced operation the values of the 12 firing angles ($\beta_1$ to $\beta_{12}$) are all equal, and the values of overlap angles ($u_1$ to $u_{12}$) are all equal, hence the values of extinction angle ($\gamma 1$ to $\gamma_{12}$) are all equal. It is normally necessary to operate an inverter at the smallest value of $\gamma$ consistent with reasonable freedom from commutation failure due to moderate transients, a value of $\gamma = 15°$ being typical. The value of $\beta$ is then typically 40° at full load current.

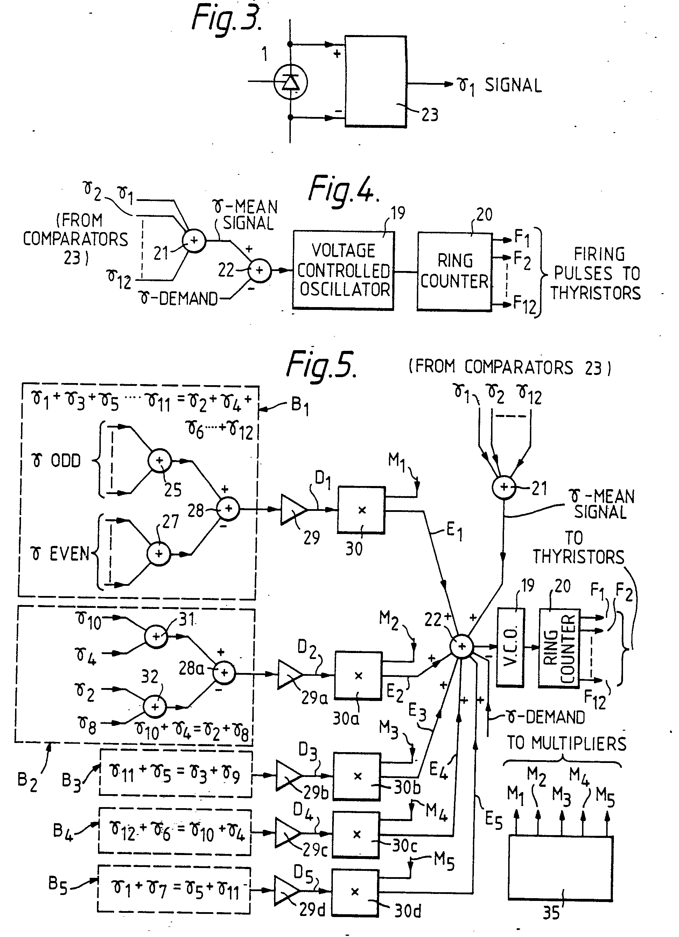

It is convenient to generate signals indicating $\gamma$ is mark-space form, as shown in Figure 2(j). Such a signal is readily generated by means of a comparator 23 (Fig. 3) which generates a constant output signal whenever the anode-cathode voltage of thyristor 1 is negative.

Figure 4 shows a known control system for controlling the mean value of $\gamma$ in an inverter of the type shown in Figure 1. Signals $\gamma_1$—$\gamma_{12}$, which may be in mark-space form as generated by the comparator 23 in Figure 3 or alternatively in the form of D.C. signals proportional to the respective $\gamma$ values, as described for example in U.K. patent No. 1,170,953, are added in a first adder 21. The output of adder 21 (which typically has a response time of 30 electrical degrees or less) is a D.C. directly proportional to the mean of $\gamma_1$ to $\gamma_{12}$ and is fed to a second adder 22. A $\gamma$-demand signal in the form of a constant D.C. voltage is subtracted in adder 22 and the resulting error signal fed to voltage controlled oscillator 19 which in turn feeds a twelve stage ring counter 20. Thus oscillator 19 and ring counter 20 together constitute a controllable source of firing pulses. Corresponding firing pulses $F_1$ to $F_{12}$ are fed at phase intervals of approximately 30° to the respective gates of thyristors 1 to 12. If the mean of $\gamma_1$ to $\gamma_{12}$ is too high in comparison with the demand signal, the control or error signal fed to the V.C.O. 19 is positive and the oscillator frequency increases, thereby advancing the next firing pulse, which corresponds to a decrease in $\beta$ and hence in $\gamma$. Thus the control system acts as a negative feedback loop with an integral characteristic.

Figure 5 shows a preferred control system in accordance with the invention for controlling the inverter of Figure 1. The system comprises an adder 22 into which is fed a γ-mean signal from adder 21 and a γ-demand signal as in the arrangement shown in Figure 4. Additionally, error signals $E_1$ to $E_5$ are fed to positive inputs of adder 22, by way of amplifiers 29 to multipliers 30, from respective balancing circuits $B_1$ to $B_5$. The error signals $E_1$ to $E_5$ are generated from respective difference signals $D_1$ to $D_5$ and modulating signals $M_1$ to $M_5$ from a signal generator 35 by respective multipliers 30, 30a, 30b, 30c and 30d.

Balancing circuit $B_1$ comprises an adder 25 which sums odd-number γ-signals (which are in mark space form as in Figure 2(j)) and an adder 27 which sums even-numbered γ-signals. Each γ-signal $γ_i$ is measured across the $i^{th}$ thyristor in the firing sequence. Adder 28 generates a signal proportional to the difference betweem the sums of the odd and even γ's and this is amplified and smoothed over several half cycles by amplifier 29 to generate difference signal $D_1$. Balancing circuit $B_2$ balances the particle sums $γ_{10} + γ_4$ and $γ_2 + γ_8$ via adders 31, 32 and 28a in a similar manner to circuit $B_1$. Balancing circuit $B_3$ balances $γ_{11} + γ_5$ with $γ_3 + γ_9$, circuit $B_4$ balances $γ_{12} + γ_6$ with $γ_{10} + γ_4$ and circuit $B_5$ balances $γ_1 + γ_7$ with $γ_5 + γ_{11}$. The outputs $D_3$, $D_4$, $D_5$ are smoothed and amplified by amplifiers 29b, 29c and 29d respectively. It should be noted that the responses of the balancing circuits are much slower than adder 21 which controls mean γ, and that signals $D_1$ to $D_5$ are virtually D.C. in comparison with the A.C. output frequency of the inverter. Signals $D_1$ to $D_5$ may be positive or negative depending on the sense in which the γ sums are inbalanced. Before considering the way in which modulating signals $M_1$ to $M_5$ and difference signals $D_1$ to $D_5$ serve to control the ring counter 20 it should be noted that in order to control each γ individually, it is necessary to control each of the 12 degrees of freedom of the system. A convenient method of achieving this is to control means γ and to balance the following eleven pairs of partial γ sums which constitute the additional eleven degrees of freedom of the system:

1) $γ_1 + γ_3 + γ_5 + γ_7 + γ_9 + γ_{11} = γ_2 + γ_4 + γ_6 + γ_8 + γ_{10} + γ_{12}$

2) $γ_{10} + γ_4 = γ_2 + γ_8$

3) $γ_{11} + γ_5 = γ_3 + γ_9$

4) $γ_{12} + γ_6 = γ_{10} + γ_4$

5) $γ_1 + γ_7 = γ_5 + γ_{11}$

6) $γ_{10} = γ_4$

7) $γ_{11} = γ_5$

8) $γ_{12} = γ_6$

9) $γ_1 = γ_7$

10) $γ_2 = γ_8$

11) $γ_3 = γ_9$

The system shown in Figure 5 only controls mean γ and the pairs of partial γ sums contained in equations 1 to 5. In order to rigidly control each γ individually it would be necessary to incorporate additional balancing circuits each comprising a single adder which subtracts one γ from another according to equations 6 to 11. However, we have found that particular balancing circuits respond to particular cases of imbalance, so that when the latter are absent, the corresponding balancing circuits may be dispensed with. Thus imbalance between the γ's of equations 6 to 11 mainly arises from a fundamental frequency A.C. component of the D.C. source or a second harmonic from the A.C. system and may often safely be ignored.

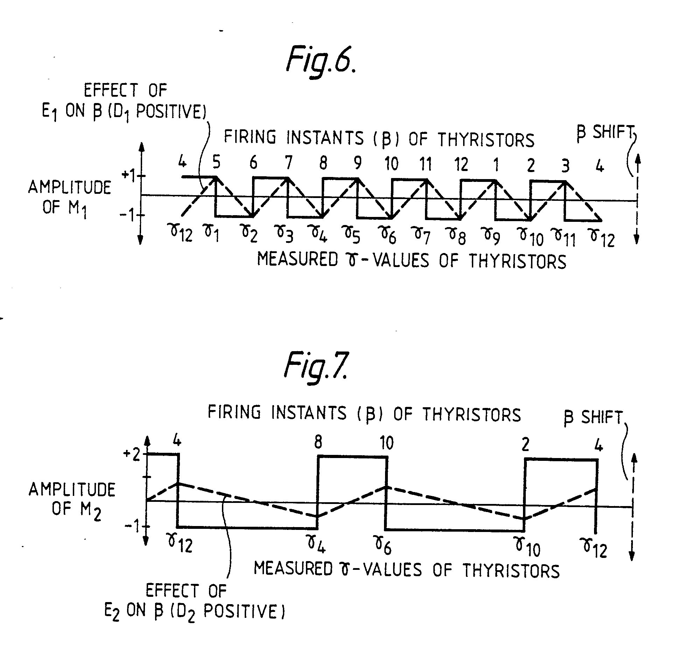

The operation of the control system of Figure 5 may be understood by considering the waveforms of modulating signals $M_1$ and $M_2$ shown in Figures 6 and 7. Referring firstly to Figure 6, $M_1$ is shown as a square wave at the 6th harmonic of the A.C. output frequency of the inverter. Since the V.C.O. 19 in Figure 5 confers an integral characteristic on the control loop, the actual effect of the modulating function $M_1$ when multiplied by the virtually D.C. difference signal $D_1$ (giving error signal $E_1$) will be the integral of $M_1$ multiplied by a positive or negative constant. This effect on the β values of the thyristors is shown by the dashed sawtooth waveform. It can be seen that the firing points of the odd-numbered thyristors are delayed whilst those of the even-numbered thyristors are advanced. $D_1$ is assumed to be positive in Figure 6 but if it goes negative (for example because of the selective β shift applied by the control loop in the state described above) the sawtooth waveform will invert and tend to restore $D_1$ to zero. It should be noted from Figure 2 that the firing instant of any thyristor n in the inverter of Figure 1 will be determined by (correspond to) the value of γ meansured across the anode and cathode of thyristor (n-4).

Referring now to Figure 7, it can be seen that modulating signal $M_2$ is chosen to have the greatest effect on $γ_2$, $γ_4$, $γ_8$ and $γ_{10}$, i.e. it corresponds essentially to equation 2) above. The sawtooth waveform becomes smaller in amplitude and then inverts as $D_2$ decreases in amplitude and goes negative, and thereby balances $γ_{10} + γ_4$ with $γ_8 + γ_2$ in the same way that $M_1$ belances γ odd with γ even.

$M_1$ is chosen to have equal positive and negative amplitudes so as to ensure that in use, the mean value of $E_1$ is zero so that the mean value of γ is not affected. The mean value of $E_2$ is arranged to be zero by making the positive amplitude of $M_2$ (during its nominal 30° wide periods) twice as great as its negative amplitude (during its nominal 60° wide periods). The envelope of its effect in changing the firing angles is shown as a dashed sawtooth waveform, having maximum effect on the firing times of those values (no.'s 4, 6, 10 and 12) which influences $γ_8$, $γ_{10}$, $γ_2$ and $γ_4$ respectively according to equation 2), with only slight effects on the other γ values. The correspondence between the γ values and firing instants of the thyristors is indicated schematically in Figures 6 and 7, but it should be remembered that each value is in fact a time interval The waveforms of $M_3$, $M_4$ and $M_5$ are identical to $M_2$ except that they are successively delayed in phase by 30°. If balancing of individual γ's according to equation 6) to 11) above is required, a square-wave modulating function at the fundamental A.C. output frequency may be used, and phased so that its corresponding integral (a symmetrical sawtooth function) peaks at the firing instant of the appropriate thyristors.

## Claims

1. A multi-phase inverter comprising a bridge array of phase-controlled unidirectional switching devices (1—12), a controllable source of firing pulses (19—20) for said switching devices, and a phase control system, comprising means (23) for measuring the extinction angle ($\gamma$) of each switching device and for comparing actual extinction angle values with desired extinction angle values in order to equalise said extinction angles, the inverter being characterised in that said phase control system comprises means ($B_1$—$B_5$) for comparing the values of selected extinction angles ($\gamma_1$—$\gamma_{12}$) and deriving at least one net difference signal ($D_1$—$D_5$), means (30, 30a, 30b, 30c, 30d) for deriving from the or each said net difference signal a control signal ($E_1$—$E_5$) which is added (22) to any other such control signal and applied to said source of firing pulses, each said control signal ($E_1$—$E_5$) being of such form in magnitude, polarity and phase (Figures 6 & 7, broken lines) as to adjust the firing instants of the firing pulses of those switching drvices which determine said selected extinction angles in a sense such as to tend to equalise said selected extinction angles.

2. A multi-phase inverter as claimed in Claim 1 characterised in that said means ($B_1$—$B_5$) for comparing the values of selected extinction angles is arranged to compare partial sums, each of two or more of said selected extinction angles of respective phase-controlled unidirectional switching devices.

3. A multi-phase inverter as claimed in Claim 1 or Claim 2, characterised in that said means for deriving a control signal comprises a multiplier (30, 30a, 30b, 30c, 30d) which is arranged to multiply the or each said net difference signal ($D_1$—$D_5$) by a modulating signal ($M_1$—$M_5$) to generate said control signal ($E_1$—$E_5$), the modulating signal having a fundamental frequency which is equal to or a harmonic of the A.C. output frequency of the converter and being phased so as to cause the control signal to have maximum effect on those firing angles.

4. A multi-phase inverter as claimed in any preceding Claim characterised by feedback means for controlling the mean extinction angle of said switching devices.

5. A multi-phase inverter as claimed in any preceding Claim wherein the or each said net difference signal ($D_1$—$D_5$) is smoothed in a smoothing circuit having a time constant greater than or equal to twice the period of the A.C. output of the inverter.

6. A multi-phase inverter as claimed in Claims 4 and 5, wherein the or each said modulating signal ($M_1$—$M_5$) is substantially a square wave and the control signal ($E_1$—$E_5$) or the sum of each of the control signals is fed as a frequency-control signal to an oscillator (19), the firing signals ($F_1$—$F_{12}$) for said switching devices being generated in synchronism with the output of said oscillator.

7. A multi-phase inverter as claimed in Claim 5 wherein a signal representative of said mean extinction angle ($\gamma$-MEAN) is added to, and a signal representative of a demanded mean extinction ($\gamma$-DEMAND) angle is subtracted from said frequency-control signal before it is fed to said oscillator (19) so as to provide negative feedback control of the extinction angles of said switching devices.

8. A multi-phase inverter as claimed in any of Claims 4 to 7 wherein sufficient partial sums of extinction angles are controlled to govern all the degrees of freedom of the inverter, thereby effectively controlling each individual extinction angle of said switching devices.

## Patentansprüche

1. Mehrphasenwechselrichter enthaltend eine Brückenanordnung aus phasengesteuerten unidirektionalen Schaltvorrichtungen (1 bis 12), eine steuerbare Zündimpulsquelle (19 bis 20) für die Schaltvorrichtungen und ein Phasensteuersystem mit Einrichtungen (23) zum Messen des Löschwinkels ($\gamma$) jeder Schaltvorrichtung und zum Vergleichen von Löschwinkel-Istwerten mit Löschwinkel-Sollwerten zum Zwecke des Gleichmachens der Löschwinkel, dadurch gekennzeichnet, daß das Phasensteuersystem enthält eine Einrichtung ($B_1$ bis $B_5$) zum Vergleichen der Werte ausgewählter Löschwinkel ($\gamma_1$ bis $\gamma_{12}$) und zum Ableiten wenigstens eines Nettodifferenzsignals ($D_1$ bis $D_5$) und eine Einrichtung (30, 30a, 30b, 30c, 30d) zum Ableiten aus dem oder jedem derartigen Nettodifferenzsignal ein Steuersignal ($E_1$ bis $E_5$), das mit irgendeinem anderen derartigen Steuersignal addiert (22) und an die Zündimpulsquelle gelegt wird, wobei jedes derartige Steuersignal ($E_1$ bis $E_5$) bezüglich seines Betrages, seiner Polarität und Phase (FIG. 6 und 7, unterbrochene Linien) eine solche Form hat, daß die Zündzeitpunkte der Zündimpulse derjenigen Schaltvorrichtungen, die diese ausgewählten Löschwinkel festlegen, in einem solchen Sinne eingestellt werden, daß eine Tendenz zum Gleichmachen dieser ausgewählten Löschwinkel besteht.

2. Mehrphasenwechselrichter nach Anspruch 1, dadurch gekennzeichnet, daß die Einrichtung ($B_1$ bis $B_5$) zum Vergleichen der Werte von ausgewählten Löschwinkeln derart ausgebildet ist, daß Teilsummen miteinander verglichen werden, wobei jede Teilsumme aus zwei oder mehreren dieser ausgewählten Löschwinkel von jeweiligen phasengesteuerten unidirektionalen Schaltvorrichtungen gebildet ist.

3. Mehrphasenwechselrichter nach Anspruch 1 oder 2, dadurch gekennzeichnet, daß die Einrichtung zum Ableiten eines Steuersignals eine Multipliziereinrichtung (30, 30a, 30b, 30c, 30d) enthält, welche das oder jedes derartige Nettodifferenzsignal ($D_1$ bis $D_5$) mit einem Modulationssignal ($M_1$ bis $M_5$) multipliziert zwecks Erzeugung des

Steuersignals ($E_1$ bis $E_5$), wobei das Modulationssignal eine Grundfrequenz hat, die gleich der Wechselstromausgangsfrequenz des Umformers oder einer Oberwellenfrequenz davon ist, und eine solche Phasenlage hat, daß das Steuersignal maximalen Einfluß auf diejenigen Zündzeitpunkte nimmt, die diese ausgewählten Löschwinkel festlegen.

4. Mehrphasenwechselrichter nach einem der vorstehenden Ansprüche, gekennzeichnet durch eine Rückführeinrichtung zum Steuern des mittleren Löschwinkels der Schaltvorrichtungen.

5. Mehrphasenwechselrichter nach einem der vorstehenden Ansprüche, bei dem das oder jedes derartige Differenzsignal ($D_1$ bis $D_5$) in einer Glättungsschaltung geglättet wird, deren Zeitkonstante größer als oder gleich dem Zweifachen der Periode der Wechselstromausgangsgröße des Wechselrichters ist.

6. Mehrphasenwechselrichter nach Anspruch 4 und 5, bei dem das oder jedes derartige Modulationssignal ($M_1$ bis $M_5$) im wesentlichen eine Rechteckschwingung ist und das Steuersignal ($E_1$ bis $E_5$) oder die Summe aus allen Steuersignalen als Frequenzsteuersignal einem Oszillator (19) zugeführt wird, wobei die Zündsignale ($F_1$ bis $F_{12}$ für die Schaltvorrichtungen synchron mit der Ausgangsgröße diese Oszillators erzeugt.

7. Mehrphasenwechselrichter nach Anspruch 5, bei dem ein den mittleren Löschwinkel (γ-MEAN) darstellendes Signal dem Frequenzsteuersignal hinzuaddiert und ein einen gewünschten mittleren Löschwinkel (γ-DEMAND) darstellendes Signal von dem Frequenzsteuersignal subtrahiert wird, und zwar bevor das Frequenzsteuersignal zum Oszillator (19) gelangt zwecks Bereitstellung einer negativen Rückführsteuerung des Löschwinkel der Schaltvorrichtungen.

8. Mehrphasenwechselrichter nach einem der Ansprüche 4 bis 7, bei dem hinreichende viele Teilsummen aus Löschwinkeln gesteuert werden zur Regelung aller Freiheitsgrade des Wechselrichters, wodurch jeder einzelne Löschwinkel der Schaltvorrichtungen wirksam gesteuert wird.

**Revendications**

1. Convertisseur polyphasé comprenant un arrangement en pont de dispositifs unidirectionnels de commutation commandés en phase (1—12), une source réglable d'impulsions d'amorçage (19—20) des dispositifs de commutation, et un circuit de réglage de phase, comprenant un dispositif (23) de mesure de l'angle d'extinction (γ) de chaque dispositif de commutation et de comparaison des valeurs réelles de l'angle d'extinction à des valeurs voulues de l'angle d'extinction afin que les angles d'extinction soient égalisés, le convertisseur étant caractérisé en ce que le circuit de réglage de phase comporte un dispositif ($B_1$—$B_5$) de comparaison des valeurs des angles choisis d'extinction (γ₁—γ₁₂) et de dérivation d'au moins un signal résultant de différence ($D_1$—$D_5$), un dispositif (30, 30a, 30b, 30c, 30d) destiné à dériver du signal résultant de différence ou de chaque signal résultant de différence, un signal de commande (E₁—E₅) qui est ajouté (22) à tout autre signal analogue de commande et qui est appliqué à ladite source des impulsions d'amorçage, chaque signal de commande (E₁—E₅) ayant une amplitude, une polarité et une phase (figures 6 et 7, traits interrompus) telles que les moments d'amorçage des impulsions d'amorçage des dispositifs de commutation qui déterminent les angles choisis d'extinction sont réglés dans un sens tel que les angles choisis d'extinction ont tendance à s'égaliser.

2. Convertisseur polyphasé selon la revendication 1, caractérisé en ce que les dispositif ($B_1$—$B_5$) de comparaison des valeurs des angles choisis d'extinction est réalisé afin qu'il compare les sommes partielles, chacune formée d'au moins deux angles choisis d'extinction de dispositif unidirectionnels respectifs de commutation commandés en phase.

3. Convertisseur polyphasé selon l'une des revendications 1 et 2, caractérisé en ce que le dispositif destiné à dériver un signal de commande comporte un circuit multiplicateur (30, 30a, 30b, 30c, 30d) qui est destiné à multiplier le signal résultant de différence ou chaque signal résultant de différence ($D_1$—$D_5$) par un signal de modulation ($M_1$—$M_5$) afin qu'il crée le signal de commande ($E_1$—$E_5$), le signal de modulation ayant une fréquence fondamentale qui est égale à la fréquence alternative de sortie du convertisseur ou qui est un harmonique de cette fréquence et étant en phase de manière que le signal de commande ait un effet maximal sur les moments d'amorçage qui déterminent les angles choisis d'extinction.

4. Convertisseur polyphasé selon l'une quelconque des revendications précédentes, caractérisé par un dispositif de réaction destiné à régler l'angle moyen d'extinction des dispositifs de commutation.

5. Convertisseur polyphasé selon l'une quelconque des revendications précédentes, dans lequel le signal résultant de différence ou chaque signal résultant de différence ($D_1$—$D_5$) est lissé dans un circuit de lissage ayant une constante de temps supérieure ou égale au double de la période du signal alternatif de sortie du convertisseur.

6. Convertisseur polyphasé selon l'une des revendications 4 et 5, dans lequel le signal de modulation ou chaque signal de modulation ($M_1$—$M_5$) est pratiquement une onde rectangulaire et le signal de commande ($E_1$—$E_5$) ou la somme de chacun des signaux de commande est transmis sous forme d'un signal de réglage de fréquence à un oscillateur (19), des signaux d'amorçage ($F_1$—$F_{12}$) destinés aux dispositifs de commutation étant créés en synchronisme avec le signal de sortie de l'oscillateur.

7. Convertisseur polyphasé selon la revendication 5, dans lequel un signal représentatif de l'angle moyen d'extinction (γ-MOYEN) est ajouté, et un signal représentatif d'un angle moyen demandé d'extinction (γ-DEMANDE) est soustrait du signal de régalage de fréquence avant transmission à l'oscillateur (19) afin que la commande à réaction négative des angles d'extinction des dispositifs de commutation soit assurée.

8. Convertisseur polyphasé selon l'une quelconque des revendications 4 à 7, dans lequel des sommes partielles suffisantes des angles d'extinction sont réglées de manière qu'elles contrôlent tous les degrés de liberté du convertisseur, avec réglage efficace de chaque angle individuel d'extinction des dispositifs de commutation.

*Fig.1.*

*Fig.2.*

1

Fig.3.

Fig.4.

Fig.5.

## Fig.6.

EFFECT OF
$E_1$ ON $\beta$ ($D_1$ POSITIVE)

FIRING INSTANTS ($\beta$) OF THYRISTORS — $\beta$ SHIFT

4  5  6  7  8  9  10  11  12  1  2  3  4

AMPLITUDE OF $M_1$ — +1 / -1

$\tau_{12}$  $\tau_1$  $\tau_2$  $\tau_3$  $\tau_4$  $\tau_5$  $\tau_6$  $\tau_7$  $\tau_8$  $\tau_9$  $\tau_{10}$  $\tau_{11}$  $\tau_{12}$

MEASURED $\tau$ - VALUES OF THYRISTORS

## Fig.7.

FIRING INSTANTS ($\beta$) OF THYRISTORS — $\beta$ SHIFT

4    8    10    2    4

AMPLITUDE OF $M_2$ — +2 / -1

$\tau_{12}$    $\tau_4$    $\tau_6$    $\tau_{10}$    $\tau_{12}$

MEASURED $\tau$ - VALUES OF THYRISTORS

EFFECT OF
$E_2$ ON $\beta$ ($D_2$ POSITIVE)

3